# EUROPÄISCHE PATENTANMELDUNG

(11) **EP 4 420 569 A1**
(43) Veröffentlichungstag der Anmeldung: **28.08.2024**
(21) Anmeldenummer: 24153731.5
(22) Anmeldetag: 24.01.2024
(51) Int. Cl.: A47J 27/05

(54) **VERFAHREN FÜR DIE GLEICHZEITIGE ZUBEREITUNG MEHRERER SPEISEN IN EINEM DAMPFGARBEHÄLTER, INSBESONDERE EINEM DAMPFGARAUFSATZ EINER KÜCHENMASCHINE, SOWIE DAFÜR GEEIGNETES SET VON GARGEFÄSSEN**

(30) Priorität: 22.02.2023 DE 102023104319; 22.02.2023 DE 202023100828 U
(71) Anmelder: Wundermix GmbH, 85748 Garching b. München (DE)
(72) Erfinder: Duran, Erhan, 63801 Kleinostheim (DE)
(74) Vertreter: Patentanwälte Bauer Vorberg Kayser

(57) **Zusammenfassung**

Gargefäße zum Einsetzen in einen Dampfgarbehälter sind bekannt. Um ein flexibel ein erweiterbares Set von Gargefäßen für die gleichzeitige Zubereitung mehrerer Speisen in einem Dampfgarbehälter bereitzustellen, wird vorgeschlagen, dass die Gargefäße stapelbar sind und ein unteres Gargefäß (2a) mit einem Zubereitungsbereich (3a) für die Zubereitung einer Speise, und mindestens ein darüber gestapeltes, oberes Gargefäß (2b) mit einem Zubereitungsbereich (3a) für die Zubereitung einer Speise aufweisen, wobei die Gargefäße (2; 2a; 2b) jeweils einen Boden haben, der im Zubereitungsbereich (3a) geschlossen ausgebildet ist, und wobei zwischen den übereinander gestapelten Gargefäßen (2; 2a; 2b) mindestens ein Dampfdurchlass (9) ausgebildet ist.

## Beschreibung

### Technologischer Hintergrund

Die Erfindung betrifft ein Set von Gargefäßen für die Zubereitung von Speisen in einem Dampfgarbehälter, insbesondere in einem Dampfgaraufsatz einer Küchenmaschine.

Außerdem geht es bei der Erfindung um ein Verfahren für die gleichzeitige Zubereitung mehrerer Speisen in einem Dampfgarbehälter, insbesondere einem Dampfgaraufsatz einer Küchenmaschine.

Küchenmaschinen werden für die Vor- und Zubereitung von Speisen, wie etwa zum mechanischen Kneten, Rühren, Zerkleinern oder Schneiden eingesetzt. Um eine thermische Behandlung von Nahrungsmitteln zu ermöglichen, ist eine Heizeinrichtung integriert. Mittels der Heizeinrichtung kann heißer Wasserdampf erzeugt werden. Dieser ermöglicht eine schonende thermische Behandlung von Lebensmitteln durch Dampfgaren oder Dünsten. Häufig verfügen Küchenmaschinen daher über einen optionalen Dampfgaraufsatz, der auf den Mixtopf-Deckel aufgesetzt wird.

### Stand der Technik

Eine derartige elektrische Küchenmaschine ist aus der DE 10 2011 056 802 A1 bekannt. Der von der Basiseinheit abnehmbare Mixtopf ist mit einem bodenseitig angeordneten rotierbaren Messersatz zum Zerkleinern, Kneten oder Mischen von Lebensmitteln ausgestattet. Auf den Mixtopf-Deckel kann ein Dampfgaraufsatz zum Dampfgaren und Dünsten von Lebensmitteln aufgesetzt werden. Die Unterseite des Dampfgaraufsatzes ist an die Ausgestaltung der Deckel-Oberseite des Mixtopfes angepasst, so dass sich eine Formschlussverbindung ergibt. Der Dampfgaraufsatz weist eine Seitenwand auf, die beidseitig mit Handgriffen versehen ist und die eine nach oben gerichteten freien und umlaufenden Auflagebereich aufweist, auf dem ein gewölbeartig über die Öffnungsebene sich erstreckender Überfangdeckel aufliegt.

Dem Garraum des Dampfgaraufsatzes wird über seinen mit Durchtrittsöffnungen versehenen Boden Wasserdampf zugeführt, der auf das auf dem Boden aufgeschichtete Gargut einwirkt. Durch Einsetzen eines perforierten Zwischenbodens wird eine horizontale Unterteilung des Garraums ermöglicht. Der Zwischenboden ragt dabei von oben in den Garraum hinein. Die Perforation des Zwischenbodens ermöglicht das Hindurchströmen von Wasserdampf, so dass gleichzeitig weiteres oder anderes Gargut auf dem Zwischenboden gedünstet und gegart werden kann.

Anstelle dieser horizontalen Unterteilung des Garraums schlägt die DE 20 2021 000 460 U1 eine vertikale Unterteilung des Garraums des Dampfgaraufsatzes einer Küchenmaschine mittels eines Teilungseinsatzes vor. Dieser wird auf dem perforierten Boden des Dampfgaraufsatzes aufgestellt. Der Teilungseinsatz umfasst ein vertikal orientiertes zentrales Rohr, von dessen Außenmantelfläche mehrere Teilungsflügel abstehen, die den Garraum in Sektionen unterteilen.

### Technische Aufgabenstellung

Die bekannten Garraumteiler ermöglichen die gleichzeitige aber räumliche getrennte Zubereitung von unterschiedlichem Gargut im vorhandenen Garraum, indem sie diesen in Teil-Garräume unterteilen, die von unten nach oben mit dem heißen Wasserdampf durchströmt werden. Durch die Unterteilung kann das unterschiedliche Gargut getrennt voneinander in die Teil-Garräume eingefüllt und ebenso nach Fertigstellung wieder getrennt voneinander entnommen werden.

Diese Unterteilung erfordert allerdings eine Anpassung des jeweiligen Garraumteilers an die Innengeometrie des Garraums, insbesondere da dessen Innenwand gleichzeitig eine Begrenzungswand des jeweiligen Teil-Garraums bildet. Diese Anpassung bestimmt wiederum die Abmessungen und Volumina der zur Verfügung stehenden Teil-Garräume und verringert insoweit die Flexibilität beim Einsatz der bekannten Garraumteiler.

Der vorliegenden Erfindung liegt daher die Aufgabe zugrunde, ein Verfahren anzugeben, das die gleichzeitige Zubereitung mehrerer Speisen in einem Dampfgarbehälter mit weitgehender Unabhängigkeit bezüglich der vom Dampfgarbehälter vorgegebenen Innenabmessungen ermöglicht.

Außerdem liegt der Erfindung die Aufgabe zugrunde ein flexibel erweiterbares Set von Gargefäßen für die gleichzeitige Zubereitung mehrerer Speisen in einem Dampfgarbehälter bereitzustellen, das im Wesentlichen unabhängig von der Innengeometrie des Dampfgarbehälters gestaltbar und einsetzbar ist.

### Allgemeine Darstellung der Erfindung

Hinsichtlich des Sets von Gargefäßen für die Zubereitung von Speisen in einem Dampfgarbehälter, insbesondere in einem Dampfgaraufsatz einer Küchenmaschine, wird diese Aufgabe erfindungsgemäß durch ein Set mit den Merkmalen von Anspruch 1 gelöst.

Das Set umfasst mindestens stapelbare oder zwei übereinander gestapelter Gargefäße, nämlich ein unteres und mindestens ein oberes Gargefäß. Es ist aber erweiterbar auf beispielsweise drei oder mehr und besonders bevorzugt mindestens fünf übereinander stapelbarer oder gestapelter Gargefäße. Die Anzahl ist durch die Höhe des Garraums begrenzt. Das ist in der Regel der freie Abstand zwischen dem Garraum-Boden und eines aufgesetzten Garraum-Deckels. Die zwischen dem unteren und dem oberen Gargefäß angeordneten Gargefäße des Stapels sind obere Gargefäße, erfüllen aber gleichzeitig auch Funktionen des unteren Gargefäßes. Die gestapelten Gargefäße sind sozusagen auf mehreren "Etagen" angeordnet.

Die Gargefäße haben einen Boden, der in einem Zubereitungsbereich geschlossen ausgeführt ist, das heißt: er ist nicht perforiert und flüssigkeitsdicht. Der Zubereitungsbereich ist derjenige Bereich, der zur Aufnahme des zu behandelnden Nahrungsmittels dient (im Folgenden auch als "Gargut" bezeichnet). Da der Boden mindestens im Zubereitungsbereich geschlossen ausgeführt ist, kann darauf nicht nur festes Gargut aufgenommen werden, wie etwa Gemüse, Klöße, Fleisch oder Fisch und dergleichen, sondern auch flüssiges oder pastöses Gargut, wie beispielsweise Eier- oder Teigmassen. Flüssiges oder pastöses Gargut wird im Folgenden auch als "Gargut-Rohmasse" bezeichnet.

Jedes der Gargefäße ist für Zubereitung einer Speise ausgelegt. Die Speisen sind gleich oder sie sind unterschiedlich. Das Gargefäß-Set ermöglicht die gleichzeitige und flexible Zubereitung mehrerer Speisen, je nach Anzahl der Gargefäße, die das Set bilden.

Das Gargefäß-Set wird in den Garraum eines Dampfgarbehälters eingesetzt und bildet darin einen Gargefäße-Stapel. Beim Einsatz befindet sich der Gargefäße-Stapel vollständig innerhalb des Garraums und ist von heißem Wasserdampf umgeben. Zwischen zwei benachbarten Gargefäßen des Stapels ist jeweils mindestens ein Dampfdurchlass vorgesehen. Der Dampfdurchlass dient zum Einleiten von heißem Wasserdampf in den Zubereitungsbereich hinein und zum Ausleiten von Wasserdampf aus dem Zubereitungsbereich heraus. Das im Zubereitungsbereich einer jeden "Etage" vorhandene Gargut wird durch den ein- und ausströmenden Wasserdampf gedünstet beziehungsweise dampfgegart. Keine Wandung des Garraums wird als Ablagefläche für Gargut benötigt.

Der Dampfgarbehälter stellt lediglich den Garraum zur Verfügung. Das Gargefäß-Set ist im einfachsten Fall so ausgelegt, dass der daraus gebildete Gargefäße-Stapel auf dem Boden des Dampfgarbehälters aufliegt und eine eigenständige, selbsttragende Einheit bildet.

Im Stapel sind die einzelnen Gargefäße des Sets zwar vorzugsweise lose übereinander gestapelt, aber durch Formschluss insoweit miteinander verbunden, dass ein Abrutschen von Gargefäßen oder ein Umkippen des Stapels vermieden wird. Der Stapel ist in sich stabil, und zwar auch ohne Verbindung oder Kontakt mit der Innenwand oder einem Deckel des Dampfgaraufsatzes, in den er eingesetzt ist. Insoweit ist der Stapel unabhängig von der Innengeometrie des Garraums; eine besondere Anpassung daran ist nicht erforderlich.

Bei einer besonders bevorzugten Ausführungsform des Sets sind die Gargefäße baugleich und weisen jeweils auf: einen Boden mit einer Boden-Oberseite und einer Boden-Unterseite, eine von der Boden-Oberseite nach oben abstehende, umlaufende Seitenwand, die den Zubereitungsbereich umschließt, mindestens einen von der Boden-Unterseite nach unten abstehenden Abstandshalter, sowie mindestens eine von der Oberseite zugängliche Abstandshalter-Aufnahme in einem Bereich außerhalb des Zubereitungsbereichs.

Dadurch, dass die Gargefäße baugleich sind, ist keine Stapel-Reihenfolge festgelegt. Der Stapel aus mindestens drei, vorzugsweise mindestens fünf baugleichen Gargefäßen hat eine platzsparende, zylinderförmige Außenkontur.

Der nach unten abstehende Abstandshalter des oberen Gargefäßes lagert auf oder in der Abstandshalter-Aufnahme des darunter angeordneten, unteren Gargefäßes. Die Abstandshalter-Aufnahme ist von oben zugänglich, also offen. Der Abstandshalter ist mit der Abstandshalter-Aufnahme insoweit formschlüssig verbunden, als ein Abrutschen des oberen Gargefäßes vom unteren Gargefäß verhindert wird.

Der oder die Abstandshalter stellen somit den vertikalen Abstand zwischen benachbarten Gargefäßen ein. Es hat sich bewährt, wenn zwischen der Boden-Oberseite des unteren Gargefäßes und der Boden-Unterseite des oberen Gargefäßes ein lichter Abstand im Bereich von 8mm bis 30mm, vorzugsweise im Bereich von 10mm bis 20mm vorgesehen ist.

Die Größe dieses lichten Abstandes in Verbindung mit der Höhe der umlaufenden Seitenwand bestimmt die Größe des Dampfdurchlasses zwischen den benachbarten Gargefäßen. Dieser ist vorzugsweise als umlaufender Ringspalt oder als unterbrochener Ringspalt mit einer Spaltweite im Bereich von 2mm bis 8mm ausgeführt.

Da der oder die Abstandshalter nach unten ragen (und nicht nach oben), stören sie nicht beim Aufbringen des Gargutes oder bei dessen Entnahme.

Die mindestens eine Abstandshalter-Aufnahme liegt außerhalb des Zubereitungsbereichs, so dass der oder die in die Abstandshalter-Aufnahme hineinragenden oder dort anliegenden oder dort aufliegenden Abstandshalter nicht mit dem Gargut beziehungsweise der Gargut-Rohmasse in Kontakt kommen.

Die Gargefäße sind beispielsweise als stapelbare Pfännchen ausgeführt. Sie können jeweils einen kurzen Stiel oder einen Haltegriff oder mehrere Haltegriffe haben, beispielsweise zwei Haltegriffe an sich gegenüberliegenden Seiten der Pfännchen-Seitenwand.

Die Gargefäße bestehen beispielsweise aus Metall, Keramik oder einem temperaturstabilen und lebensmittelechten Kunststoff. Die Boden-Oberseite ist vorzugsweise glatt und damit leicht zu reinigen. Sie kann mit einer Antihaftbeschichtung versehen sein.

Im bevorzugten Fall hat die umlaufende Seitenwand einen kreisrunden Querschnitt und erstreckt sich entlang eines inneren Umfangsbereichs, und die mindestens eine Abstandshalter-Aufnahme ist ebenfalls kreisrund ausgebildet und erstreckt sich entlang eines äußeren Umfangsbereichs, der sich außerhalb des inneren Umfangsbereichs befindet.

Dabei hat es sich bewährt, wenn die mindestens eine Abstandshalter-Aufnahme als umlaufende Nut ausgebildet ist, die nach innen von der umlaufenden Seitenwand und nach außen von einem erhöhten umlaufenden Außenrand begrenzt ist.

Bei mehreren, um den Umfang gleichmäßig verteilten Abstandshaltern, die die ringförmige Seitenwand umgreifen, genügt an und für sich allein diese Seitenwand für einen ausreichenden Formschluss. Die Abstandshalter können gegebenenfalls auf einem Außenflansch aufliegen, so dass die Abstandshalter-Aufnahme als umlaufende Stufe ausgebildet ist.

Bei der hier erörterten, besonders bevorzugten Ausführungsform ist die Abstandshalter-Aufnahmefläche ergänzend zu der inneren Begrenzung durch die Seitenwand mit einer äußeren Begrenzung durch einen erhöhten, umlaufenden Außenrand versehen. Die beiderseitige Begrenzung der Abstandshalter-Aufnahme bewirkt, dass die mindestens eine nach oben hin offene Abstandshalter-Aufnahme eine Vertiefung bildet, in die der mindestens eine Abstandshalter von oben hineinragt. Dies trägt zu einer höheren Stabilität des Stapels und einem verstärkten Formschluss zwischen benachbarten Gargefäßen bei.

Im Zusammenhang damit hat es sich bewährt, wenn der erhöhte umlaufende Außenrand mindestens einen Durchbruch aufweist.

Dadurch wird gewährleistet, dass Flüssigkeit abfließen kann, die sich andernfalls infolge von Kondensation in der vertieften Abstandshalter-Aufnahme ansammeln könnte.

Bei einer anderen bevorzugten Ausführungsform sind mehrere, vorzugsweise mindestens drei, um den äußeren Umfangsbereichs verteilte und mit Abstand voneinander angeordnete Abstandshalter vorgesehen.

Die Abstandshalter sind idealerweise gleichmäßig um den äußeren Umfangsbereichs verteilt. Sie unterbrechen den als Dampfdurchlass dienenden Ringspalt zwischen den benachbarten Gargefäßen. Ihre Abmessung in Umfangsrichtung ist daher nur so groß, wie dies aus Stabilitätsgründen erforderlich ist. Die Anzahl von drei oder vier Abstandshaltern hat sich als besonders kippstabil erwiesen.

Die Höhe der Seitenwand bestimmt die maximale Höhe des Garguts beziehungsweise der Gargut-Rohmasse. Je höher die Seitenwand ist, umso weniger Gargefäße kann der noch in den Dampfgarbehälter hineinpassende Gargefäße-Stapel enthalten.

Im Hinblick darauf hat es sich als vorteilhaft erweisen, wenn die Seitenwand eine Höhe im Bereich von 5mm bis 20mm, bevorzugt im Bereich von 6mm bis 15mm aufweist. Der von der Seitenwand nach außen begrenzte innere Umfangsbereichs ergibt den maximal zur Verfügung stehenden Zubereitungsbereich und hat vorzugsweise einen Durchmesser im Bereich von 100mm bis 200mm, besonders bevorzugt im Bereich zwischen 130mm und 180mm.

Hinsichtlich des Verfahrens für die gleichzeitige Zubereitung mehrerer Speisen in einem Dampfgarbehälter wird die oben genannte technische Aufgabe durch ein Verfahren mit den Merkmalen von Anspruch 12 gelöst.

Dabei werden mehrere Gargefäße jeweils mit einer Gargut-Rohmasse für eine Speise befüllt, und unter Bildung eines Gargefäße-Stapels übereinander gestapelt. Dieser Stapel wird in einen Dampfgarbehälter eingesetzt und darin die Gargut-Rohmasse unter Einwirkung von heißem Wasserdampf zu der Speise gedünstet oder gegart.

Die Gargut-Rohmasse liegt beispielsweise als Teig- oder Ei-Masse vor. Unterschiedliche Gargefäße des Stapels können mit der gleichen Gargut-Rohmasse oder mit unterschiedlicher Gargut-Rohmasse befüllt werden. Die nach dem Dünsten oder Dampfgaren erhaltenen Speisen sind beispielsweise Pfannkuchen, Crêpes, Dampfnudeln, Omeletts, Spiegelei, Kartoffelpuffer oder Rösti.

Die Gargut-Rohmassen enthalten beispielsweise Mehl, Ei, Milch, Butter und/oder geriebene Kartoffeln und sind vorzugsweise als Teigling ausgebildet.

Als Dampfgarbehälter wird besonders vorteilhaft ein Dampfgaraufsatz verwendet, der auf einem Mixtopf einer Küchenmaschine aufgesetzt ist.

### Ausführungsbeispiel

Nachfolgend wird die Erfindung anhand von Ausführungsbeispielen und einer Patentzeichnung näher erläutert. Im Einzelnen zeigt in schematischer Darstellung
- **Figur 1**: einen Ausschnitt einer Küchenmaschine mit Mixtopf, Dampfgaraufsatz und einer Ausführungsform eines gestapelten Sets von Gargefäßen (Pfannenstapel) in einer dreidimensionalen Explosionsdarstellung,
- **Figur 2**: den auf den Mixtopf aufgesetzten Dampfgaraufsatz und darin eingesetztem Gargefäß-Stapel von Figur 1,
- **Figur 3**: ein einzelnes Gargefäß in einer Draufsicht auf die Boden-Oberseite,
- **Figur 4**: das Gargefäß von Fig. 3 in einer dreidimensionalen Ansicht auf die Oberseite,
- **Figur 5**: das Gargefäß von Fig. 3 in einer dreidimensionalen Ansicht auf die Unterseite,
- **Figur 6**: einen Zweierstapel aus Gargefäßen der Figuren 3 bis 5 in einer Seitenansicht, und
- **Figur 7**: eine fotoähnliche Darstellung einer weiteren Ausführungsform eines Sets gestapelter Gargefäße in einer Seitenansicht.

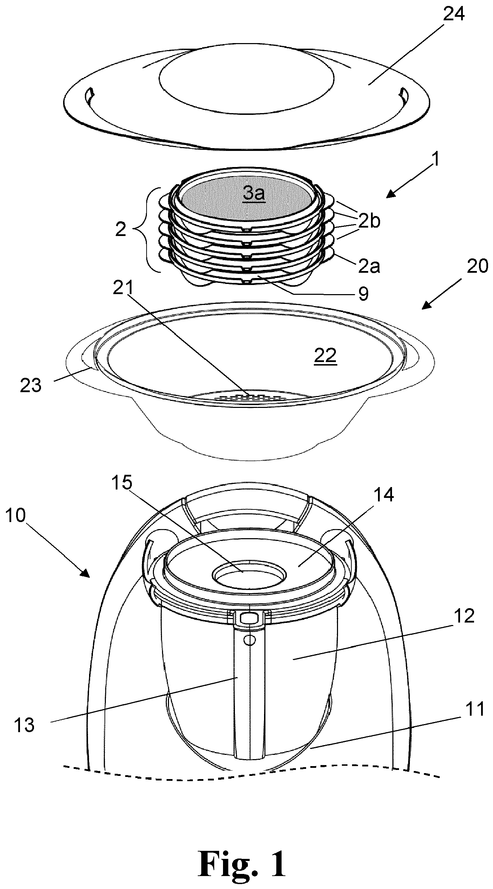

Die in **Figur 1** schematisch und im Ausschnitt dargestellte, multifunktionale Küchenmaschine weist auf - wie aus dem Stand der Technik bekannt: ein Basisgerät 10 auf, das einen Elektromotor (in der Figur nicht dargestellt) für den Antrieb des Bearbeitungswerkzeugs (in der Figur nicht dargestellt) und eine Aufnahme 11 für einen Mixtopf 12 bereitstellt. Das Basisgerät 10 ist außerdem mit einem Bedienungstableau einschließlich einer Starttaste und einem Display zum Überwachen und Einstellen von Rezepturen oder von Parametern einer thermo-mechanischen Behandlung von Nahrungsmitteln im Mixtopf 11 ausgestattet. Der Mixtopf 11 hat einen Handgriff 13 und eine von einem oberen umlaufenden Rand begrenzte Einfüllöffnung 15, die mittels eines Deckels 14 abgedeckt ist.

Auf den Deckel 14 ist unmittelbar ein Dampfgaraufsatz 20 aufgesetzt, der dabei mit konstruktiven Lagerelementen des Deckels 14 zusammenwirkt. Bei einer alternativen Ausführungsform ist auf dem Deckel 14 unmittelbar ein becherförmiges Zwischen-Bauteil gelagert, dessen Oberseite äquivalente oder gleiche konstruktive Lagerelemente wie der Deckel 14 aufweist, und auf der der Dampfgaraufsatz 20 aufgesetzt wird. Dieser ist gegebenenfalls mittelbar auf dem Deckel 14 gelagert.

Der Dampfgaraufsatz 20 dient zum Dampfgaren oder Dünsten von Lebensmitteln mit heißem Wasserdampf, der im Mixtopf 12 mittels der Heizeinrichtung erzeugt wird. Der Dampfgaraufsatz 20 ist schalenförmig ausgeführt und hat einen perforierten Boden 21, durch den der heiße Wasserdampf in einen Dampf-Garraum 22 eintritt. Der obere Rand 23 des Dampfgaraufsatzes 20 hat einen leicht nach unten gewölbten Außenflansch, und er hat auf seiner Oberseite eine umlaufende Innennut, die eine Auflagefläche für einen Abschlussdeckel 24 bildet, der den Dampf-Garraum 22 nach oben hin abschließt.

In den Garraum 22 wird ein Set gestapelter Gargefäße gemäß der Erfindung eingesetzt. Dieses besteht im Ausführungsbeispiel aus einem Pfannenstapel 1 aus insgesamt fünf baugleichen Pfännchen 2. Auf dem unteren Pfännchen 2a sind vier obere Pfännchen 2b übereinander gestapelt. Die Boden-Oberseite 3a der Pfännchen 2 stellt einen des Zubereitungsbereich für die Speise bereit. Zwischen benachbarten Pfännchen 2 sind schlitzförmige Dampföffnungen 9 vorgesehen.

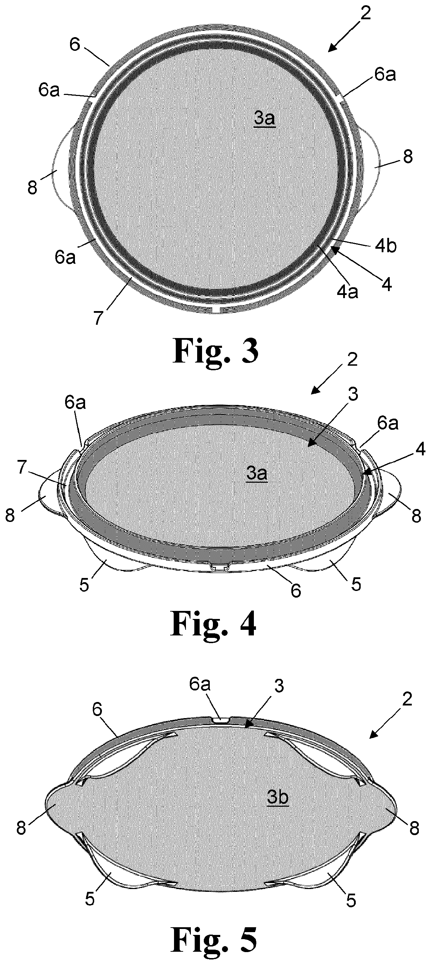

**Figur 3** zeigt ein einzelnes Pfännchen 2 in einer Draufsicht auf die Oberseite, **Figur 4** zeigt das Pfännchen 2 in dreidimensionaler Darstellung mit einer Ansicht auf die Oberseite, und **Figur 5** zeigt die Ansicht auf die Pfännchen-Unterseite. Das Pfännchen 2 hat einen geschlossenen Boden 3, der von einer nach oben ragenden kreisförmigen Seitenwand 4 umgeben ist. Die von der kreisförmigen Seitenwand 4 umschlossene Oberseite 3a des Bodens 3 ist glatt und im Einbauzustand horizontal orientiert; sie stellt gleichzeitig den Zubereitungsbereich (3a) für die Aufnahme und Zubereitung des Garguts dar, wie Gemüse, Klöße, Fleisch oder Fisch, und auch flüssiges oder pastöses Gargut, wie beispielsweise Eier- oder Teigmassen. Aus Stabilitätsgründen hat die Seitenwand 4 eine verbeiterte

Basis und verjüngt sich nach oben hin. In der Draufsicht von Figur 3 zeigt sich dies als Doppellinie, wobei die innere Linie 4a die Innenseite und die äußere Linie 4b die Außenseite der Seitenwand 4 darstellt. Der Durchmesser im Bereich der Basis beträgt des Zubereitungsbereichs 3a beträgt 150mm.

Die Seitenwand 4 hat eine Höhe von 8,5mm. Sie ist von etwas niedrigeren, ebenfalls kreisförmigen Außenwand 6 umgeben, wobei in der Außenwand 6 drei Durchbrüche 6a eingebracht sind. Zwischen Seitenwand 4 und Außenwand 6 ist eine umlaufende und nach oben hin offene Ringnut 7 mit einer Breite von 4mm ausgebildet. Die Ringnut 7 befindet sich somit außerhalb des Zubereitungsbereichs 3a.

An zwei sich gegenüberliegenden Seiten des Bodens 3 stehen zwei Handgriffe 8 in radialer Richtung nach außen ab.

In der Nähe des Außenrandes des Bodens 3 stehen von der Boden-Unterseite 3b vier Abstandshalter 5 senkrecht nach unten ab. Die Abstandshalter 5 sind kreissegmentförmig ausgeführt und sind entsprechend dem Radius am Boden-Außenrand gebogen.

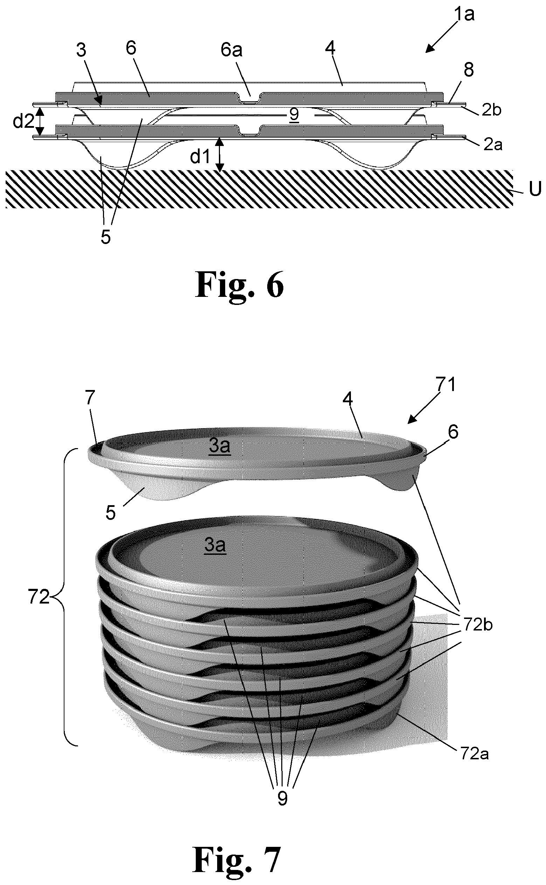

**Figur 6** zeigt einen Stapel 1a mit zwei übereinander gestapelten Pfännchen 2 Die Abstandshalter 5 des unteren Pfännchen 2a stehen auf einer ebenen Unterlage U auf, so dass sich zwischen der Unterlage U und der Unterseite 3b des Bodens 3 ein lichter Abstand d1 von 12,7mm ergibt. Das ist auch der Abstand, den benachbarte Pfännchen 2 haben.

Die Abstandshalter 5 des oberen Pfännchens 2b ragen in die Ringnut 7 des unteren Pfännchens 2a, so dass sich insoweit ein Formschluss ergibt, der ein gegenseitiges Verrutschen der Pfännchen 2 und ein Verkippen des Stapels 1a verhindert. Zwischen der Oberseite 3a des Bodens 3 des unteren Pfännchens 2a und der Unterseite 3b des Bodens 3 des oberen Pfännchens 2a ergibt sich ein Ringspalt mit einer Spaltweite d2 von 4,2mm. Da sich die Abstandshalter 5 insgesamt nur über einen Teil des Umfangs der Ringnut 7 erstrecken, bilden sich zwischen benachbarten Abstandshaltern Dampfdurchlässe 9 mit der Spaltweite d2, die für eine Zirkulation des heißen Wasserdampfes im Zubereitungsbereich sorgen.

Die Pfännchen 2 bestehen aus talkgefülltem Polypropylen (Bezeichnung PP-T20). Dieser Kunststoff ist lebensmittelecht zeichnet sich durch hohe mechanische Festigkeit, Wärmeformbeständigkeit und chemische Beständigkeit aus.

Nachfolgend wird eine Verfahrensweise zur gleichzeitigen Herstellung von Pfannkuchen durch Dampfgaren in einem Dampfgaraufsatz 20 einer Küchenmaschine 10 anhand der Figuren 1 bis 6 näher erläutert:

Aus Milch, Zucker, Salz, Mehl und Eiern wird in bekannter Weise ein Pfannkuchenteig hergestellt. In den Mixtopf 12 wird etwa 1 Liter frisches Wasser oder Brühe eingefüllt. Auf die Deckelöffnung 15 des Mixtopfes 12 wird der Dampfgaraufsatz 20 aufgesetzt. Das Wasser oder die Brühe im Mixtopf wird zum Kochen gebracht und bei der Temperatur um 100°C gehalten.

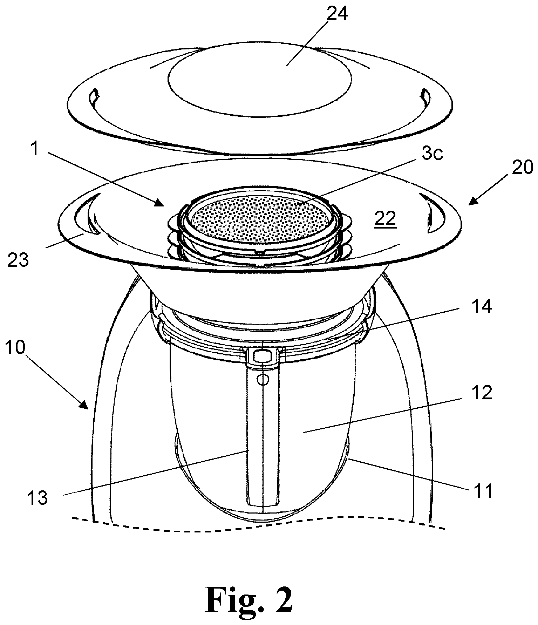

In fünf baugleiche Pfännchen 2 wird jeweils eine etwa gleich große Portion des Pfannkuchenteigs (3c in Figur 2) gegeben, und die befüllten Pfännchen 2 werden übereinander angeordnet, so dass der Pfannenstapel 1 erhalten wird. Dieser bildet eine eigenständige, selbsttragende Einheit. Er wird in den Garraum 22 des Dampfgaraufsatz 20 eingebracht und auf den Boden 21 aufgesetzt. Dieses Verfahrensstadium zeigt schematisch **Figur 2****.** Abschließend wird der Deckel 24 auf den Dampfgaraufsatz 20 aufgesetzt.

Unter Einwirkung des heißen Wasserdampfes beginnt der Pfannkuchenteig 3c sogleich sich zu verfestigen. Nach etwa 10 Minuten ist der Dampfgarprozess abgeschlossen und der Pfannenstapel 1 kann aus dem Dampfgaraufsatz 20 entnommen und die fertigen, heißen und durch Dampfgaren zubereiteten Pfannkuchen serviert werden.

**Figur 7** zeigt einen weitere Ausführungsform eines Pfännchen-Stapels 71 anhand einer fotoähnlichen Darstellung. Gleiche Bezugsziffern wie bei der oben erläuterten ersten Ausführungsform bezeichnen identische Bestandteile oder Bauteile. Der Stapel 71 enthält sieben übereinander gestapelte Pfännchen 72, mit dem unteren Pfännchen 72a und sechs oberen Pfännchen 72b, wobei das oberste Pfännchen aus Gründen der besseren Erkennbarkeit der Abstandshalter 5 abgehoben dargestellt ist. Gut zu erkennen sind außerdem die Boden-Oberseite 3a, die Seitenwand 4, die Außenwand 6, die umlaufende Nut 7 und die Dampfdurchlässe 9. Im Unterschied zur vorher beschriebenen, ersten Ausführungsform haben die Pfännchen 72 dieser Ausführungsform nur drei Abstandshalter 75, und sie haben keine Handgriffe (8).

## Patentansprüche

1. Set stapelbarer Gargefäße zum Einsetzen in einen Dampfgarbehälter (20) als Gargefäß-Stapel (1; 1a), aufweisend ein unteres Gargefäß (2a) mit einem Zubereitungsbereich (3a) für die Zubereitung einer Speise, und mindestens ein darüber gestapeltes, oberes Gargefäß (2b) mit einem Zubereitungsbereich (3a) für die Zubereitung einer Speise, wobei die Gargefäße (2; 2a; 2b) jeweils einen Boden (3) haben, der im Zubereitungsbereich (3a) geschlossen ausgebildet ist, und wobei zwischen den übereinander gestapelten Gargefäßen (2; 2a; 2b) mindestens ein Dampfdurchlass (9) ausgebildet ist.

2. Set nach Anspruch 1, **dadurch gekennzeichnet, dass** der mindestens eine Dampfdurchlass (9) als umlaufender oder unterbrochener Ringspalt (7) zwischen dem unteren Gargefäß (2a) und dem mindestens einen oberen Gargefäß (2b) ausgebildet ist.

3. Set nach Anspruch 1 oder 2, **dadurch gekennzeichnet, dass** die übereinander gestapelten Gargefäße (2; 2a; 2b) durch Formschluss miteinander verbunden sind und eine selbstragende Einheit (1; 1a) bilden.

4. Set nach einem oder mehreren der vorhergehenden Ansprüche, **dadurch gekennzeichnet, dass** die Gargefäße (2; 2a; 2b) baugleich sind und jeweils aufweisen: einen Boden (3) mit einer Boden-Oberseite (3a) und einer Boden-Unterseite (3b), eine von der Boden-Oberseite (3a) nach oben abstehende, umlaufende Seitenwand (4), die den Zubereitungsbereich (3a) umschließt, mindestens einen von der Boden-Unterseite (3b) nach unten abstehenden Abstandshalter (5), sowie mindestens eine von oben zugängliche Abstandshalter-Aufnahme (7) in einem Bereich außerhalb des Zubereitungsbereichs (3a).

5. Set nach Anspruch 4, **dadurch gekennzeichnet, dass** zwischen der Boden-Oberseite (3a) des unteren Gargefäßes (2a) und der Boden-Unterseite (3b) des oberen Gargefäßes (2b) ein lichter Abstand im Bereich von 8mm bis 30mm, vorzugsweise im Bereich von 10mm bis 20mm vorgesehen ist.

6. Set nach Anspruch 4 oder 5, **dadurch gekennzeichnet, dass** die umlaufende Seitenwand (4) einen kreisrunden Querschnitt aufweist und sich entlang eines inneren Umfangsbereichs erstreckt, und dass sich die mindestens eine Abstandshalter-Aufnahme (7) außerhalb des inneren Umfangsbereichs befindet, und dass sie bevorzugt ebenfalls kreisrund ausgebildet ist und sich entlang eines äußeren Umfangsbereichs erstreckt.

7. Set nach Anspruch 6, **dadurch gekennzeichnet, dass** die mindestens eine Abstandshalter-Aufnahme (7) als umlaufende Nut ausgebildet ist, die nach innen von der umlaufenden Seitenwand (4) und nach außen von einem erhöhten umlaufenden Außenrand (6) begrenzt ist.

8. Set nach Anspruch 7, **dadurch gekennzeichnet, dass** der erhöhte umlaufende Außenrand (6) mindestens einen Durchbruch (6a) aufweist.

9. Set nach einem oder mehreren der Ansprüche 4 bis 8, **dadurch gekennzeichnet, dass** mehrere um den äußeren Umfangsbereichs verteilte und mit Abstand voneinander angeordnete Abstandshalter (5) vorgesehen sind.

10. Set nach einem oder mehreren der Ansprüche 4 bis 9, **dadurch gekennzeichnet, dass** die Seitenwand (4) eine Höhe im Bereich von 5mm bis 20mm aufweist, bevorzugt im Bereich von 6mm bis 15mm, und dass der innere Umfangsbereichs einen Durchmesser im Bereich von 100mm bis 200mm, besonders bevorzugt im Bereich zwischen 130mm und 180mm hat.

11. Set nach einem oder mehreren der vorhergehenden Ansprüche, **dadurch gekennzeichnet, dass** es mindestens drei übereinander gestapelte oder stapelbare, baugleiche Gargefäße (2; 2a; 2b), besonders bevorzugt mindestens fünf übereinander gestapelte oder stapelbare, baugleiche Gargefäße (2; 2a; 2b) umfasst.

12. Verfahren für die gleichzeitige Zubereitung mehrerer Speisen in einem Dampfgarbehälter (20), wobei mehrere Gargefäße (2; 2a; 2b) eines Sets nach einem der Ansprüche 1 bis 11 jeweils mit einer Gargut-Rohmasse (3c) für eine Speise befüllt, und die Gargefäße (2; 2a; 2b) unter Bildung eines Gargefäße-Stapels (1; 1a) übereinander gestapelt werden, der Stapel (1; 1a) in den Dampfgarbehälter (20) eingesetzt und darin die Gargut-Rohmassen (3c) unter Einwirkung von heißem Wasserdampf zu den Speisen gedünstet oder gegart werden.

13. Verfahren nach Anspruch 12, **dadurch gekennzeichnet, dass** die Gargut-Rohmassen (3c) Mehl, Ei, Milch, Butter und/oder geriebene Kartoffeln enthalten und vorzugsweise als Teigling ausgebildet sind.

14. Verfahren nach Anspruch 12 oder 13, **dadurch gekennzeichnet, dass** als Dampfgarbehälter (20) ein Dampfgaraufsatz verwendet wird, der auf einem Mixtopf (12) einer Küchenmaschine (10) aufgesetzt ist.
